# EUROPEAN PATENT APPLICATION

(11) **EP 4 672 723 A1**
(43) Date of publication of application: **31.12.2025**
(21) Application number: 24465542.9
(22) Date of filing: 26.06.2024
(51) Int. Cl.: H04L 67/562, H04L 9/40, H04L 67/566, H04L 67/104, H04L 67/12

(54) **MULTI-PARTY DATASET ARCHITECTURE**

(71) Applicant: Siemens Aktiengesellschaft, 80333 München (DE)
(72) Inventor: COMAN, Andrei Laurentiu, 500256 Brasov (RO); TINTOIU, Anca Mihaela, 117630 Rucar (RO); KOVACS, Yvonne, 505600 Sacele (RO); TATUC, Cosmina Stefania, 507075 Ghimbav (RO); VLADAREAN, Cristina Maria, 500283 Brasov (RO)
(74) Representative: Petcu, Costin

(57) **Abstract**

The invention relates to systems, devices, and methods for managing communication between electronic devices including a data consumer device, at least two data owner devices, a proxy module communicatively connected with the data consumer device and the at least two data owner devices, wherein the proxy module is configured to receive, from the data consumer device, a request for obtaining data, determine, which of the at least two data owner devices to address for providing the data, send to each of the determined data owner devices a request for obtaining the data or a part of the data, receive the data or a part of the data from the determined data owner devices, aggregate the received data, and to transmit the aggregated data to the data consumer device.

## Description

### Field of the Invention

The present invention relates to the field of systems and methods for managing data transfer between electronic components.

### Technological Background

In the highly competitive and rapidly evolving manufacturing sector, the process of obtaining critical technical information, including technical data, test data, data sheets, and bills of materials (BOM), from multiple component providers such as different components/devices along a manufacturing line or a supply chain poses a substantial computational challenge. This information is pivotal for various devices that are data consumers for ensuring proper functioning, such as product quality, compliance, and to facilitate the integration of components from various sources. However, the current practices necessitate manufacturers to request that the data consumer device is commonly responsible for handling the data requests with a plurality of data owner devices. This method is not only time-consuming but also computationally inefficient and prone to errors and security vulnerabilities in the data transfer. The scalability of manufacturing operations is severely hampered by the cumbersome process of data acquisition. As the number of components and partners increases, the complexity and the workload of managing this information grow exponentially. This situation is further aggravated during instances of rapid changes in the manufacturing process, such as the introduction of new components, changes in specifications or requirements, or shifts in regulatory requirements for compliance. In such scenarios, the delay in accessing up-to-date information can lead to significant disruptions and the computational load on both the data consumer devices and the data owner devices increases substantially.

### Description of Invention

There is thus a need for architectures, systems, and methods that facilitate scalable data transfer between a growing number of devices while mitigating security vulnerabilities. Moreover, there is a need to reduce the computational load associated with managing the data transfers and authorizations from various devices, while increasing transparency of the transfer history, for example for traceability or auditability.

According to an aspect of the present disclosure, there is provided a system for managing communication between electronic devices, the system including a data consumer device, at least two data owner devices, a proxy module communicatively connected with the data consumer device and the at least two data owner devices, wherein the proxy module is configured to: receive, from the data consumer device, a request for obtaining data, determine, which of the at least two data owner devices to address for providing the data, based on the request from the data consumer device and based on information indicative of which one of the at least two data owner devices is responsible for and/or permitted to provide the requested data or a part of the data, send to each of the determined data owner devices a request for obtaining the data or a part of the data, receive the data or a part of the data from the determined data owner devices, aggregate the received data, and to transmit the aggregated data to the data consumer device.

As used herein, the data consumer device(s) and one or more of the at least two data owner devices may refer to electronic devices, software implementations, or a combination thereof, which may be physically distinct, or they may refer to a different component in a more complex device or system. For example, the data consumer device could be a manufacturing management or an order management server of an assembly facility, while each of the data owner devices could be a different manufacturing machine/device or could represent different components or stages of a manufacturing machine. For example, one data owner could be a molding temperature controller in a molding machine while another data owner could be an electronic or software module controlling the feeding mechanism of the molding machine, wherein the data owner devices represent different parts that are interrelated functionally and physically. For example, one data owner could represent a manufacturing machine of one component, such as an electronic component, while another data owner device could represent another manufacturing machine of another component, such as a mechanical component, wherein the manufacturing machines are physically and functionally distinct.

As used herein, the term data consumer device refers to an entity that requests data from one or more data owner devices.

As used herein, the term data owner device refers to an entity that owns/holds data corresponding to properties thereof or of an asset under the responsibility thereof, a functional state thereof, a mechanical state thereof, a stage of operation therein, or the like. Upon request, and conditional to meeting authorization/contract requirements if applicable, the data owner device provides requested data to the data consumer.

According to some embodiments, the various components, devices, or modules that are communicatively connected are configured with communication, including data transmission and reception capabilities, therebetween. According to some embodiments, the communication capabilities are facilitated via wired or wireless communication. According to some embodiments, the communication between different components, devices, or modules is a direct communication, for example via a direct wireless connection between the different entities using NFC, Bluetooth, WiFi, or the like, or via a direct wired connection between the different entities using wires or communication lines such as an ethernet cable or a USB cable. Alternatively, or in combination, various communication between different components, devices, or modules is a non-direct communication, for example when the communication is performed through a switch, a router, the internet, or other servers for facilitating communication between different devices.

As industrial processes become more complex, more devices and components are involved in achieving an overall objective, such as manufacturing a vehicle, operating a power plant, managing a medical record, or the like.

Traditionally, a data consumer, such as a control program or a monitoring program, is responsible for obtaining data from different data owners by directly communicating with each data owner, synchronizing the data to obtain temporally relevant status information, and dealing with authorizations or contracts/licensing for gaining access to the data with each of the data owners.

Advantageously, the system includes a proxy module, such that the data consumer communicates with the proxy module requesting data or negotiating contracts or authorization agreements, thereby resulting in the data consumer managing the data request with a single entity, particularly the proxy module, and not a plurality of data owner devices, which reduces the computational load associated with obtaining data from various data owner devices. Further advantageously, the proxy module is responsible for aggregating various parts of data from different data owner devices into a format that is acceptable and utilizable by the data consumer. Since various data owners may use different communication protocols and different data formats, the use of a proxy module allows data consumer devices to implement a single communication protocol/format with the proxy module, while the proxy module arranges the communication with the various data owner devices to which it is connected.

Further advantageously, the proxy module reduces the complexity of communicating between a data consumer and a plurality of data owners when the number of data owners and also data consumers increases, providing a scalable multi-device architecture, particularly applicable in increasingly complex manufacturing lines and supply chains.

Particularly, the proxy module or data proxy module is configured to function as an intermediary connector to a plurality of data owners to facilitate unified communication therewith by data consumer devices.

For example, in a production plant, various data owner devices include testing/measuring equipment, actuators, conveyor belts, assembly robots, milling machines, and the like, and the data consumer is a component integrator having the objective of aggregating/acquiring the components and modules required for assembling a system, such as a vehicle, a turbine, a computer, or a smartphone. As such, the component integrator negotiates access permissions and requests data from the proxy module directly, instead of negotiating access permissions and requesting data from each of the data owners, which further requires aggregating and compiling all the pieces of data from the various data owners.

The proxy module, or data proxy module, can be implemented as a software module, an electronic component, or a combination, and is incorporated into the communication architecture between the data consumers and data owners, thereby reducing computational overhead from the data consumer by reducing the number of interactions and data requests it has to manage, and reducing the need for aggregating and compiling the data from the different data owner. In other words, the data proxy module forms a single point of contact to a plurality of data owner devices in a system or a sub-system, such as a manufacturing plant or a supply chain.

According to some embodiments, the data sent between different entities in the system, such as a data consumer, a data owner, and/or a data proxy module, is meta-data send via an API, such as a representational state transfer (REST) API. According to some embodiments, the data includes binary files. According to some embodiments, the meta-data contains information about a structure of a file, for example a semantic model, and the proxy module is configured to analyze and perform associated operations using the meta data while the actual contents of transferred files are forwarded to the data consumer if the respective conditions are met, such as a successful negotiation is achieved.

According to one example, a data owner is a motor that provides sensor data as time-series for troubleshooting and/or anomaly detection. According to another example, a data owner is a robotic arm that provides position data during a manufacturing or assembly process, such as an assembly of a chassis. According to another example, the data consumer can request troubleshooting information for the entire car, such that the data proxy module negotiates and sends the appropriate files from relevant data owners, such as the motor and the robotic arm and possible other various data owners involved in the manufacturing or assembly of the car.

According to some embodiments, the system further includes a contract management module, wherein the contract management module includes a memory which stores information indicative of permissions of the data consumer device to access data from one or more of the at least two data owner devices, and wherein the proxy module is further configured to obtain, from the contract management module, the information indicative of permissions of the data consumer device to access data from one or more of the at least two data owner devices prior to sending to each of the determined data owner devices the request for obtaining the data or a part of the data.

Advantageously, the utilization of a contract management module, such as a smart contract manager (SCM), provides a centralized and unified entity for policy generation, to facilitate the contracts negotiation with a data consumer, thereby reducing the overhead on data consumers for negotiating contracts with each of the data owners individually.

Further advantageously, the contract management module and the proxy module allow implementing security measurements for reducing the risk of breaches and vulnerabilities to malicious or unauthorized access by data consumer devices, since the data owner devices may vary greatly in their computational capabilities and their capacity to manage data protection and contract management.

According to some embodiments, this architecture allows for the utilization of computational capabilities of smart contract management modules, thereby enabling data consumers to scale communications with fewer entities instead of hundreds or thousands of data owners. According to some embodiments, the smart contract manager does not perform the contract negotiations by itself, rather, the smart contract manager facilitates the policy generation of an asset, such as a data owner, and the policy is in turn used as an input for the negotiation process, advantageously reducing or removing the need for human involvement in this process. According to some embodiments, this process of policy generation and negotiation validates that all the constraints, obligations, prohibitions, and/or other conditions associated with data consumers, data owners, and/or the proxy module have no conflicts or contradictions. According to some embodiments, the status of this process is saves on the blockchain by the smart contract manager, thereby enabling traceability.

According to some embodiments, when the data is requested from the relevant data owners by the proxy module, the consent of the data owners is stored, for example on the blockchain, thereby enabling the proxy module to manage the data. Particularly, then a contract is negotiated between a data consumer and the proxy module, the consent of the relevant data owners is recorded in the contract.

According to some embodiments, the contract management module is further configured to obtain and record a data transmission status from the at least two data owner devices or the proxy module. According to some embodiments, the contract management module is configured to record the data transmission status using a blockchain module configured to chronologically store entries of data transmission statuses.

Advantageously, maintaining a record of the data transfers and/or contracts enables reliable auditing of the operation of the system by examining the data of the contract management module alone, instead of examining the records of each of the data owner devices.

Further advantageously, providing a centralized data transfer and/or contracts record by the contract management module allows for chronologically relevant records, wherein having transfer records at the data owners levels is likely to result in a lack of proper chronological order of different data transfers.

According to some embodiments, the contract management module is configured to anonymize and/or delete certain data types or parts of data that could be sensitive, such as personal medical records or trade-secret information pertaining to the operation of various machines, thereby facilitating data transfer records while maintaining data security and not exposing sensitive information.

According to some embodiments, the first step is negotiating a contract between the data consumer and the data proxy module initiated by the data consumer that requires the data transfer, and in turn, the data proxy module negotiates the contracts individually with the data owners with the use of the contract management module.

According to some embodiments, after a successful contract negotiation, the proxy module records information, such as parameters, properties, or authorization related to the data owner device of an asset of the data owner. This operation is called caching, and this cached information can be sent to the data consumer by the proxy module.

According to some embodiment, the status of the communication transfers of all involved devices or parties are recorded on a blockchain module by the contract management module, facilitating transparency of the operational records, for example, for auditing purposes.

Advantageously, as the contracts are negotiated via the contract management module between different data owners, they can be stored in a decentralized ledger, such as the blockchain or a blockchain module, enabling visibility of the contracts to authorized connected devices, and the record is maintained in a manner that is less prone to manipulations or tempering, which enables execution of data transfers according to an agreed and well-defined manner.

According to some embodiments, one or more of the at least two data owner devices includes a communication module configured to mediate communication transmission and reception between the one or more data owner devices and the proxy module.

According to some embodiments, the data consumer device includes a communication module configured to mediate communication transmission and reception between the data consumer device and the proxy module.

The term communication module is interchangeably used with the term communicator and refers to an electronic component or a software module responsible for performing communication operations of a device, such as a data consumer device and/or a data owner device.

Since different data owners and data consumers may be implemented on different platforms, using different programming languages, using different communication protocols, and the like, the use of communication modules or communicators for the various devices enables efficient communications between the different entities.

According to some examples the communication modules are configured to be platform and/or data agnostic, such that the method or format of data transmission is irrelevant to the function of the communication modules, meaning that the communication modules can receive data in multiple formats or from multiple sources, and still facilitate the communication of that data effectively. According to some embodiments, the communication between the communication modules can be achieved using a platform-independent method, such as REST API or HTTP API. According to some embodiments, while the communication between various communication modules or communication modules and the proxy modules are unified or coordinated, the communication between each communication module and its associated component, such as its data owner or its data consumer, are specific to that component. For example, communication modules can have different plugins for different protocol types, such as a file system, AWS S3, Axure Blob, or the like.

According to some embodiments, the proxy module, the contract management module, and the at least two data owner devices are arranged to form a data provider, and wherein the system includes two or more data providers communicatively connected to the data consumer device.

As used herein, the term data provider refers to an entity encapsulating a plurality of data owners with different assets. This encapsulation could be physical, such as having the data provider being a manufacturing facility and the data owners representing different assets within this facility. Alternatively, this encapsulation could be functional, such as having different functionally related data owners or assets grouped for communication purposes within the same data provider entity.

According to some embodiments, a data consumer can communicate with one or more data providers via the proxy module of each of the data providers, instead of communicating directly with the data owner, thereby enabling data consumers to achieve scalability of communication by communicating with a few data providers instead of a larger numbers such as hundreds or thousands of individual data owners.

The data consumer device requests data on the assets or data owners from a data provider, then, the data provider can communicate through the proxy module with different data owners to obtain information therefrom, and then the information is aggregated and provided in a single response to the data consumer.

According to some embodiments, the communication between the proxy module and the data consumer as well as between the proxy module and the data owners is asynchronous communication, for example, performed with the use of requests, acknowledgments, or negative responses, then responses/data are communicated and acknowledgment of the receipt of the responses/data are sent back.

According to some embodiments, specific policies could be applicable to different assets or data owners, which are specified and provided to the contract management module by the data provider. In turn, the contract management module implements the policies and manages the authorizations and contract negotiations accordingly.

According to some embodiments, after a contract is negotiated, it is saved by the contract management module, for example on a blockchain module, such that the negotiated contract is saved for future interactions between the data provider and the data consumer device.

According to some embodiments, one of the at least two data owner devices comprises the proxy module and is configured to function as a data provider, such that other data owner devices of the at least two data owner devices are communicatively connected to the proxy module of the data owner device functioning as a data provider.

Advantageously, such an architecture enables utilizing one of the data owners as the communications manager for a plurality of connected data owners.

Preferably, the data owner acting as a data provider is selected based on the computational capabilities and communication capabilities thereof. Advantageously, such an architecture enables connecting various data owners with low computational capabilities to data consumers via a proxy module of another data owner acting as a data provider.

According to an aspect of the present disclosure, there is provided a proxy module operable in a system configured to facilitate data communication between a data consumer device and at least two data owner devices, wherein the proxy module is communicatively connected with the data consumer device and the at least two data owner devices, and the proxy module is configured to: receive, from the data consumer device, a request for obtaining data, determine, which of the at least two data owner devices to address for providing the data, based on the request from the data consumer device and based on information indicative of which one of the at least two data owner devices is responsible for and/or permitted to provide the requested data or a part of the data, send to each of the determined data owner devices a request for obtaining the data or a part of the data, receive the data or a part of the data from the determined data owner devices, aggregate the received data, and to transmit the aggregated data to the data consumer device.

According to an aspect of the present disclosure, there is provided a method operable by a proxy module for controlling data communication in a system including a data consumer device, the proxy module, and at least two data owner devices, the method includes: receiving, from the data consumer device, a request for obtaining data, determining, which of the at least two data owner devices to address for providing the data, based on the request from the data consumer device and based on information indicative of which one of the at least two data owner devices is responsible for and/or permitted to provide the requested data or a part of the data, sending to each of the determined data owner devices a request for obtaining the data or a part of the data, receiving the data or a part of the data from the determined data owner devices, aggregating the received data, and to transmitting the aggregated data to the data consumer device.

Advantageously, the systems and methods brought above can be implemented in a manufacturing supply chain environment, wherein several data owner devices are associated with assets with different purposes that may have different types of data based on the function they perform. In such an environment, one data consumer can be responsible for the assembly of a final product, requiring various parts and components from different suppliers or machines. The systems and methods brought above enable the data consumer to receive aggregated/compiled data from a multitude of data owners while minimizing the computational load and overhead therefrom.

As another example, advantageously, the systems and methods brought above can be implemented in an energy supply environment, wherein an energy supplier needs to monitor the functionality and status of multiple small energy suppliers, for example using different technologies, such as solar power, wind power, fossil fuel, hydro-power, or the like. The systems and methods brought above enable the data consumer, which in this case is a control and monitoring device of the energy supplier, to obtain timely information on the performance and status of the various small energy suppliers with a single communication addressed to the proxy module.

For another example, advantageously, the systems and methods brought above can be implemented in a healthcare provider environment, such as hospitals and clinics, wherein a device of a patient, such as a smartphone of the patient, is the data consumer and requests information from various healthcare providers as data owners using a proxy module instead of contacting and communicating with each of the healthcare providers individually. In this case, the proxy module aggregates and centralizes data such as appointments, medical results, records, prescriptions, and medical history of the patient. Additionally, a hospital can act as a data consumer, requesting medical supplies from multiple distributors acting as data owners, by communicating with a single proxy module that in turn manages the requests with the relevant distributors.

For another example, advantageously, the systems and methods brought above can be implemented in a mobility environment. In such an environment, the proxy module can gathers various offers from multiple providers, such as train and bus companies, for a route specified by the consumer, thereby enabling a data consumer to easily access all the possible ways to reach a destination and buy a ticket most suitable for their needs based on various criteria.

As another example, advantageously, the systems and methods brought above can be implemented in an eLearning environment. Such eLearning platforms offer various courses from different providers acting as data owners and students are the data consumers. Using the systems and methods brought above, students are be able to connect different courses for achieving a learning path by requesting courses from multiple providers, using a proxy module instead of contacting and communicating with each of the course providers individually. The proxy module aggregates courses creating the most suitable learning path for the student.

Certain embodiments of the present disclosure may include some, all, or none of the above advantages. One or more technical advantages may be readily apparent to those skilled in the art from the figures, descriptions, and claims included herein. Moreover, while specific advantages have been enumerated above, various embodiments may include all, some, or none of the enumerated advantages.

In addition to the exemplary aspects and embodiments described above, further aspects and embodiments will become apparent by reference to the figures and by study of the following detailed descriptions.

### Brief Description of the Drawings

Examples illustrative of embodiments are described below with reference to figures attached hereto. In the figures, identical structures, elements, or parts that appear in more than one figure are generally labeled with the same numeral in all the figures in which they appear. Alternatively, elements or parts that appear in more than one figure may be labeled with different numerals in the different figures in which they appear. Dimensions of components and features shown in the figures are generally chosen for convenience and clarity of presentation and are not necessarily shown in scale. The figures are listed below.
Fig. 1 schematically illustrates a system in which multiple data consumers communicate with data owners, according to existing architectures;
Fig. 2, 3, and 4 schematically illustrate systems for facilitating communication between data consumers and data owners using a proxy module, according to some embodiments;
Fig. 5 and 6 schematically illustrate systems for facilitating communication between data consumers and data owners using a proxy module forming data providers, according to some embodiments;
Fig. 7 schematically illustrates a method for operating a system for facilitating communication between data consumers and data owners using a proxy module, according to some embodiments; and
Fig. 8 schematically illustrates a communication scheme between a data consumer, a proxy module, a contract management module, and a data owner, according to some embodiments.

### Detailed Description of the Drawings

In the following description, various aspects of the disclosure will be described. For the purpose of explanation, specific configurations, and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure.

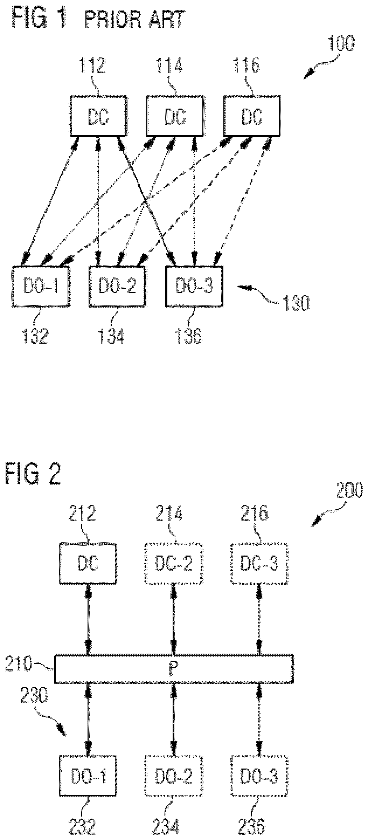

Reference is now made to Fig. 1, which schematically illustrates a system 100 in which multiple data consumers 112, 114, 116 communicate with data owners 132, 134, 136, according to existing architectures. In such systems, when a data consumer, such as a first data consumer 112 required certain data on a process, such as a manufacturing process of a device, the first data consumer 112 should identify which of the multiple data owners 130 is able to and responsible for providing various pieces of the requested data, then, a contract should be negotiated between the data consumer and the data owners 130 individually 132, 134, 136, and different parts of data are then received from the responsible data owners 130 to the first data consumer 112.

Such systems require complex interactions between the data consumers 112, 114, 116 and multiple data owners 130 which could operate using different data formats and structures and may have varying performance profiles that might limit their ability to communicate to multiple data consumers 112, 114, 116. Accordingly, with increased number of data owners 130 and increased number of data consumers 112, 114, 116, the scalability of such systems in the prior art becomes challenging and could pose data security vulnerabilities as well as performance degradation.

To overcome these challenges, according to some embodiments, a proxy module is introduced to manage and facilitate the communication between data consumers and data owners.

Reference is now made to Fig. 2, which schematically illustrates a system 200 for facilitating communication between data consumers 212, 214, 216 and data owners 230 using a proxy module 210, according to some embodiments.

Instead of having the data consumers connected directly to the data owners as in the prior art, the proxy 210 is introduced, such that the proxy 210 is connected to a data consumer 212 or, optionally, a plurality of data consumers 212, 214, 216, and the proxy 210 is also connected to the data owners 230, such as a first data owner 232, and optionally a second data owner 234 and a third data owner 236.

The proxy module 210 is configured to receive, from the first data consumer device 212, a request for obtaining data, determine, which of the data owners 232, 234, 236 to address for providing the data, based on the request from the data consumer 212 and based on information indicative of which one of the at least two data owners 230 is responsible for and/or permitted to provide the requested data or a part of the data, send to each of the determined data owners 232, 234, 236 a request for obtaining the data or a part of the data. Then, the proxy is configured to receive the data or a part of the data from the determined data owners 232, 234, 236, aggregate the received data, and to transmit the aggregated data to the first data consumer 212.

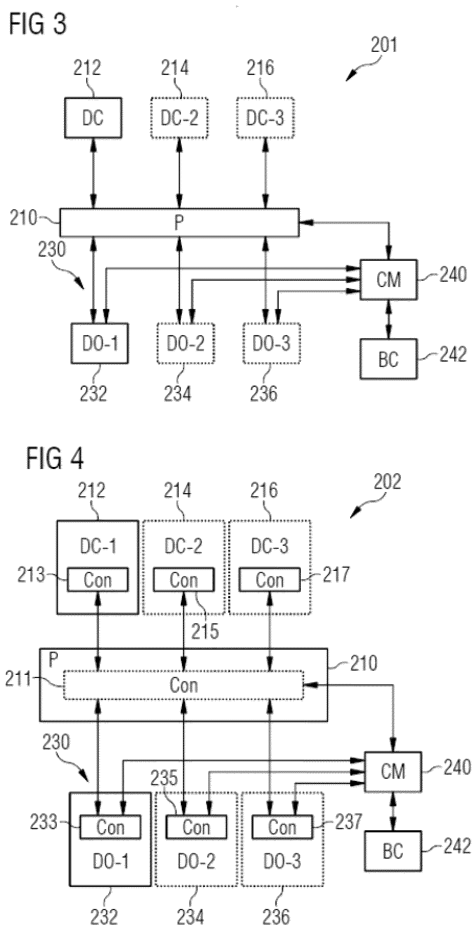

Reference is now made to Fig. 3, which schematically illustrates a system 201 for facilitating communication between data consumers 212, 214, 216 and data owners 230 using a proxy module 210, according to some embodiments. The proxy 210 in system 201 is connected to the data consumers 212, 214, 216 and to the data owners 230 as described in relation to system 200 of figure 2. Additionally, the system 201 further includes a contract management module 240 communicatively connected with the proxy 210 and each of the data owners 232, 234, 236. The contract management module 240 includes a memory which stores information indicative of permissions of the data consumers 212, 214, 216 to access data from the data owners 230, and wherein the proxy module 210 is configured to obtain, from the contract management module 240, information indicative of permissions of the data consumers 212, 214, 216 to access data from the data owners 232, 234, 236 individually or as a group of data owners 230, prior to sending to each of the determined data owners 232, 234, 236 the request for obtaining the data or a part of the data. The contract management module 240 is further configured to obtain and record a data transmission status from the data owners 232, 234, 236 or the proxy module 210, thereby facilitating traceability for auditing the data transmissions in the system 201. The contract management module 240 is configured to record the data transmission status using a blockchain module 242 configured to chronologically store entries of data transmission statuses.

To make sure that the various components, particularly different data consumers and data owners can communicate with the proxy module properly, communication modules are introduced in the data owners and data consumers.

Reference is now made to Fig. 4, which schematically illustrates a system 202 for facilitating communication between data consumers 212, 214, 216 and data owners 230 using a proxy 210 module, according to some embodiments. The proxy 210 in system 202 is connected to the data consumers 212, 214, 216 and to the data owners 230 as described in relation to system 201 of figure 3. The system 202 further includes a contract management module 240 and a blockchain module 242 similar to system 201 of figure 3. However, in the system 202, the communication modules are introduced, such that the first data consumer 212 includes a first communication module 213, the second data consumer 214 includes a second communication module 215, the third data consumer 216 includes a third communication module 217, the first data owner 232 includes a fourth communication module 233, the second data owner 234 includes a fifth communication module 235, the third data owner 236 includes a sixth communication module 237, and, optionally, the proxy module 210 includes a seventh communication module 211.

The communication modules 211, 213, 215, 217, 233, 235, 237 are configured to facilitate communication between the proxy 210 and contract management module 240 and the respective data owners 230 and data consumers 212, 214, 216.

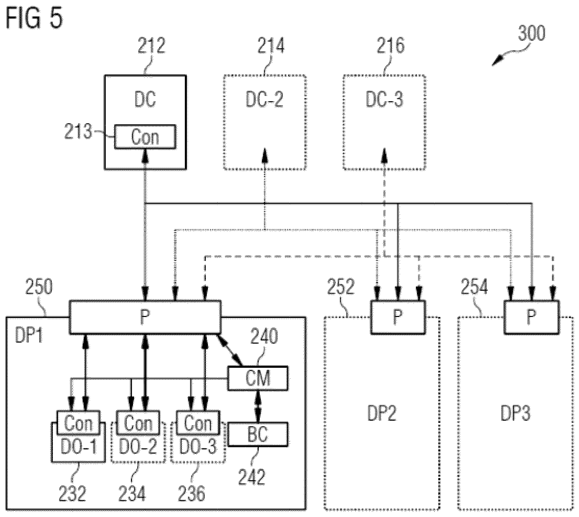

In certain environments, various data owners could be associated with one-another functionally or spatially. Accordingly, in such environments, it is advantageous to group multiple associated data owners under one data provider with a proxy module, or in other words, the proxy module is the communication interface to a data provider that includes a plurality of data owners. Reference is now made to Fig. 5, which schematically illustrates a system 300 for facilitating communication between data consumers 212, 214, 216 and data owners 232, 234, 236 using a proxy module forming data providers 250, 252, 254, according to some embodiments. The functionality and communications between the data consumers 212, 214, 216 and data owners 232, 234, 236 is similar to the functionality and communication schemes elaborated in systems 200, 201, and 202 of figures 2, 3, and 4. Additionally, in the system 300, a proxy, a contract management module 240, and a plurality of data owners 232, 234, 236 are arranged to form a data provider 250. Optionally, the system 300 includes a plurality of data providers 250, 252, 254, such that data consumers 212, 214, 216 are connected to data owners 232, 234, 236 within various data providers 250, 252, 254 through proxy modules associated with or incorporated in the data providers 250, 252, 254.

In some environments, one of the data owners could be more computationally capable than other data owners. In this case, the computationally capable data owner can include a proxy that would enable the computationally capable data owner to connect it and other data owners with a data consumer.

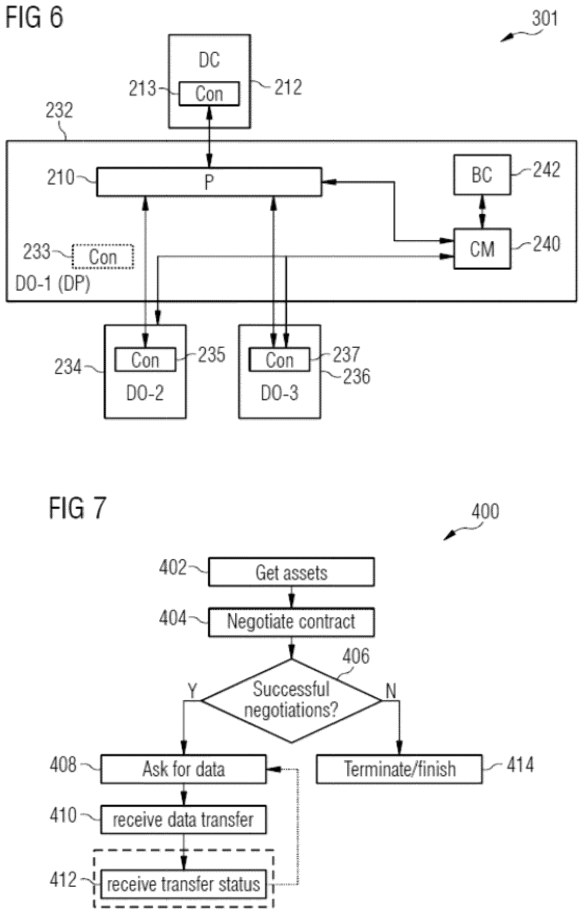

Reference is now made to Fig. 6, which schematically illustrates a system 301 for facilitating communication between a data consumer 212 and data owners 232, 234, 236 using a proxy module 210, wherein the first data owner 232 acts as a data provider, according to some embodiments. In this system 301, the functionality of the data consumer 212, proxy 210, contract management module 240, and data owners 234 and 234 is similar to the corresponding components in systems 200, 201, 202, and 300 of figures 2, 3, 4, and 5. However, in system 301, the first data owner 232 includes the proxy module 210 and acts as a data provider connected via thew proxy module 210 in the one side to the data consumer 212, and in the other side to the other data owners 234, 246. In such a configuration, a computationally capable data owner 232 can include the proxy module 210 and facilitate the communication between the data consumer 212 and the data owners 232, 234, 236.

Reference is now made to Fig. 7, which schematically illustrates a method 400 for operating a system for facilitating communication between data consumers and data owners using a proxy module, according to some embodiments. The system is similar to the systems 200, 201, 202, 300, 301 of figures 2, 3, 4, 5, and 6 elaborated above.

The method 400 begins by the data consumer requesting and obtaining 402 the assets or data owners from the proxy module, then contracts are negotiated 404 between the data consumer and the data owners through the proxy module, such that, if the negotiations are successful 406, the data consumer can ask the proxy module for data 408, and receive the data transfer aggregated by the proxy 410. Optionally, the data consumer can receive a transfer status from the proxy 412 indicating information related to the data transfer. If the negotiations are not successful 406, the communication is terminated 414.

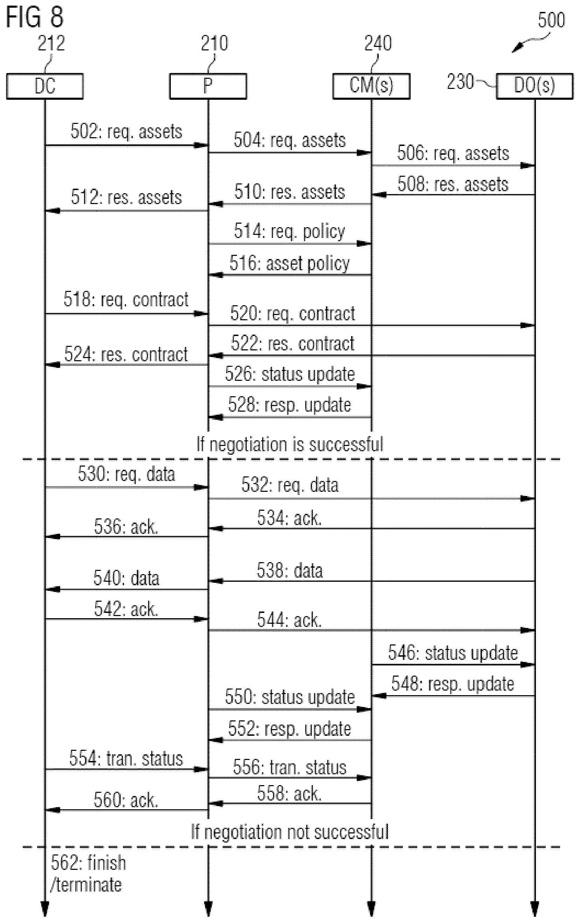

Reference is now made to Fig. 8, which schematically illustrates a communication scheme 500 between a data consumer 212, a proxy module 210, a contract management module 240, and a data owner 230, according to some embodiments.

According to the communication scheme 500, the data consumer 212 requests information 502 about the assets connected to the proxy 210, and the proxy 210 then requests 506 asset information from the plurality of connected data owners 230. When the data owners 230 respond 508 to the proxy 210 with asset information, the proxy 210 aggregates the asset information and sends the response 512 to the data consumer 212. After receiving the asset information, due to the request 502 from the data consumer 212 or independently therefrom, the proxy 210 requests policy information 214 from the contract management module 240 for the assets and receives 516 the asset policy. Upon receiving a request for establishing a contract 512 from the data consumer, the proxy module 210 negotiates 520 the contracts with data owners 230 based on the received asset policy per data owner 230. Then the proxy module 210 aggregates contract responses 522 from the data owners 230 and sends the aggregated response 524 to the data consumer 212. The status of the contract negotiation is then transferred 526 from the proxy module to the contract management module 240 which in turn sends 528 a response for the status update request.

If the negotiation process is successful, data transfer is facilitated by the proxy module 210, such that upon receiving a data request 530 from the data consumer 212, the proxy module 210 transfers the request 532 to the relevant data owners 230, and receives an acknowledgement therefrom 534 on the request, which the proxy module aggregates and transfers 536 to the data consumer. Then, when the data owners 230 send 538 the requested data to the proxy module 210, the prosy module 210 aggregates the data and sends 540 the aggregated data to the data consumer 212, which, in turn sends an acknowledgement 542 of data receipt to the proxy module 210, and the proxy module 210 sends acknowledgement messages 544 to the relevant data owners. Afterwards, the status of the transfer is updated 246, 248 between the data owners 230 and the contract management module 240, and similarly 550, 552 between the proxy module 210 and the contract management module 240. The transfer status from the data consumer 212 is communicated 554, 556 to the contract management module 240 via the proxy module 210, which also communicates 558, 560 the acknowledgement of the transfer status from the contract management module 240 to the data consumer 212.

Alternatively, if the negotiation process is not successful, the communication is terminated 562.

Unless specifically stated otherwise, as apparent from the following discussions, it is appreciated that throughout the specification discussions utilizing terms such as "processing", "computing", "calculating", "determining", "estimating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters, and the like.

Embodiments of the present disclosure may include apparatuses, modules, devices, or components for performing the operations herein. This apparatus may be specially constructed for the desired purposes, or it may comprise a general-purpose computer selectively activated or reconfigured by a computer program stored in the computer. Such a computer program may be stored in a computer-readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read-only memories (EEPROMs), magnetic or optical cards, or any other type of media suitable for storing electronic instructions, and capable of being coupled to a computer system.

The disclosure may be described in the general context of computer-executable instructions, such as program modules, being executed by a computer. Generally, program modules include routines, programs, objects, components, data structures, and so forth, which perform particular tasks or implement particular abstract data types. The disclosure may also be practiced in distributed computing environments where tasks are performed by remote processing devices that are linked through a communications network. In a distributed computing environment, program modules may be located in both local and remote computer storage media including memory storage devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude or rule out the presence or addition of one or more other features, integers, steps, operations, elements, components, or groups thereof.

While a number of exemplary aspects and embodiments have been discussed above, those of skill in the art will recognize certain modifications, additions, and sub-combinations thereof. It is therefore intended that the following appended claims and claims hereafter introduced be interpreted to include all such modifications, additions, and sub-combinations as are within their scope.

### List of Reference

100, 200, 201, 202, 300,301 system
112, 114, 116 data consumer
130 data owners
132, 134, 136 data owner
212, 214, 216 data consumer
210 proxy module
230 data owners
232, 234, 236 data owner
240 contract management module
242 blockchain module
211, 213, 215, 217, 233, 235, 237 communication module
250, 252, 254 data provider
400 method
402, 404, 406, 408, 410, 412, 414 method step
500 communication scheme
502, 504, 506, 508, 510, 512, 514, 516, 518, 520, 522, 524, 526, 528, 530, 532, 534, 536, 538, 540, 542, 544, 546, 548, 550, 552, 554, 556, 558, 560, 562 communication step

## Claims

1. A system (200, 201, 202, 300, 301) for managing communication between electronic devices, the system comprises:
- a data consumer device (212, 214, 216),
- at least two data owner devices (230, 232, 234, 236),
- a proxy module (210) communicatively connected with the data consumer device (212, 214, 216) and the at least two data owner devices (230, 232, 234, 236),
wherein the proxy module (210) is configured to:
- receive, from the data consumer device (212, 214, 216), a request for obtaining data,
- determine, which of the at least two data owner devices (230, 232, 234, 236) to address for providing the data, based on the request from the data consumer device (212, 214, 216) and based on information indicative of which one of the at least two data owner devices (230, 232, 234, 236) is responsible for and/or permitted to provide the requested data or a part of the data,
- send to each of the determined data owner devices (230, 232, 234, 236) a request for obtaining the data or a part of the data,
- receive the data or a part of the data from the determined data owner devices (230, 232, 234, 236),
- aggregate the received data, and to
- transmit the aggregated data to the data consumer device (212, 214, 216).

2. The system (200, 201, 202, 300, 301) of claim 1, further comprising a contract management module (240), wherein the contract management module (240) comprises a memory which stores information indicative of permissions of the data consumer device (212, 214, 216) to access data from one or more of the at least two data owner devices (230, 232, 234, 236), and wherein the proxy module (210) is further configured to obtain, from the contract management module (240), the information indicative of permissions of the data consumer device (212, 214, 216) to access data from one or more of the at least two data owner devices (230, 232, 234, 236) prior to sending to each of the determined data owner devices (230, 232, 234, 236) the request for obtaining the data or a part of the data.

3. The system (200, 201, 202, 300, 301) of claim 2, wherein the contract management module (240) is further configured to obtain and record a data transmission status from the at least two data owner devices (230, 232, 234, 236) or the proxy module (210).

4. The system (200, 201, 202, 300, 301) of claim 3, wherein the contract management module (240) is configured to record the data transmission status using a blockchain module (242) configured to chronologically store entries of data transmission statuses.

5. The system (200, 201, 202, 300, 301) of any of the preceding claims, wherein one or more of the at least two data owner devices (230, 232, 234, 236) comprises a communication module (233, 235, 237) configured to mediate communication transmission and reception between the one or more data owner devices (230, 232, 234, 236) and the proxy module (210).

6. The system (200, 201, 202, 300, 301) of any of the preceding claims, wherein the data consumer device (212, 214, 216) comprises a communication module (213, 215, 217) configured to mediate communication transmission and reception between the data consumer device (212, 214, 216) and the proxy module (210).

7. The system (200, 201, 202, 300, 301) of any of the preceding claims, wherein the proxy module (210), the contract management module (240), and the at least two data owner devices (230, 232, 234, 236) are arranged to form a data provider (250, 252, 254), and wherein the system (200, 201, 202, 300, 301) comprises two or more data providers (250, 252, 254) communicatively connected to the data consumer device (212, 214, 216).

8. The system (200, 201, 202, 300, 301) of any of claims 1 to 6, wherein one of the at least two data owner devices (230, 232, 234, 236) comprises the proxy module (210) and is configured to function as a data provider (250, 252, 254), such that other data owner devices (230, 232, 234, 236) of the at least two data owner devices (230, 232, 234, 236) are communicatively connected to the proxy module (210) of the data owner device (230, 232, 234, 236) functioning as a data provider (250, 252, 254).

9. A proxy module (210) operable in a system (200, 201, 202, 300, 301) configured to facilitate data communication between a data consumer device (212, 214, 216) and at least two data owner devices (230, 232, 234, 236), wherein the proxy module (210) is communicatively connected with the data consumer device (212, 214, 216) and the at least two data owner devices (230, 232, 234, 236), and the proxy module (210) is configured to:
- receive, from the data consumer device (212, 214, 216), a request for obtaining data,
- determine, which of the at least two data owner devices (230, 232, 234, 236) to address for providing the data, based on the request from the data consumer device (212, 214, 216) and based on information indicative of which one of the at least two data owner devices (230, 232, 234, 236) is responsible for and/or permitted to provide the requested data or a part of the data,
- send to each of the determined data owner devices (230, 232, 234, 236) a request for obtaining the data or a part of the data,
- receive the data or a part of the data from the determined data owner devices (230, 232, 234, 236),
- aggregate the received data, and to
- transmit the aggregated data to the data consumer device (212, 214, 216).

10. A method operable by a proxy module (210) for controlling data communication in a system (200, 201, 202, 300, 301) including a data consumer device (212, 214, 216), the proxy module (210), and at least two data owner devices (230, 232, 234, 236), the method comprises:
- receiving, from the data consumer device (212, 214, 216), a request for obtaining data,
- determining, which of the at least two data owner devices (230, 232, 234, 236) to address for providing the data, based on the request from the data consumer device (212, 214, 216) and based on information indicative of which one of the at least two data owner devices (230, 232, 234, 236) is responsible for and/or permitted to provide the requested data or a part of the data,
- sending to each of the determined data owner devices (230, 232, 234, 236) a request for obtaining the data or a part of the data,
- receiving the data or a part of the data from the determined data owner devices (230, 232, 234, 236),
- aggregating the received data, and to
- transmitting the aggregated data to the data consumer device (212, 214, 216).
